# EUROPEAN PATENT APPLICATION

(11) **EP 1 307 044 A1**
(43) Date of publication of application: **02.05.2003**
(21) Application number: 02356197.0
(22) Date of filing: 09.10.2002
(51) Int. Cl.: H04N 5/232

(54) **Supply of customized geolocalized digital images**

(30) Priority: 26.10.2001 FR 0113835
(71) Applicant: EASTMAN KODAK COMPANY, Rochester, New York 14650 (US)
(72) Inventor: Robinson, Guy, c/o Kodak Limited, Harrow, Middlesex HA1 4TY (GB); Furon, Olivier Alain, c/o Kodak Industrie, 71102 Chalon sur Saone Cedex (FR)
(74) Representative: Parent, Yves

(57) **Abstract**

The present invention is in the technological field of imaging; it is morc particularly in the field of general public services related to digital imaging.

The present invention relates to a method and a system, enabling a user equipped with a portable terminal (5) to remotely record digital images (1) of a given place, and possibly to be able to then exchange them rapidly and easily with other people. The recording of the images is operated by the remote control of a digital camera (2) placed in the location where the image is recorded. The remote control of the digital camera (2) is operated by means of the portable terminal (5).

## Description

The present invention is in the technological field of imaging; it is more particularly in the field of general public services related to digital imaging. The present invention relates to a method enabling a user equipped with a portable terminal to remotely record customized digital images of a given place, and possibly to be able to then exchange them rapidly and easily with other people having appropriate means. Digital image recording, i.e. shooting and saving, is operated by the remote control of a digital camera placed in the location where the image is recorded. The digital camera is remotely controlled by means of the portable terminal.

In the prior art, there are methods and devices that use functional interactions between devices far from one another. These interactions implement GPS (Global Positioning System) type systems or wireless links of the telephone network or high-frequency type.

US Patent 6,034,722 describes a method and device to remotely control a surveillance device from a command and control unit by viewing, in order to obtain, remotely and in real time, image data of the surveyed location. The surveillance device comprises a digital or analog camera. The control unit is fixed and managed by a single operator. The control unit comprises especially a display device enabling viewing of the images transmitted by the camera placed in the location to be surveyed, a keyboard with control buttons that enable giving instructions for moving and focussing the camera, or recording image data in said unit. The objective of this surveillance system is to optimize the number of operators to use only one operator, while improving the ergonomics of the workstation. The objective is also to control and exchange image data between two known fixed located points. The exchange of image data is operated between a set location to be surveyed and an operator posted around a fixed control unit, said operator surveying said remote location.

International Patent Application WO 00/49731 describes a device and method combining in a single physical unit, a wireless telephone, a PDA (Personal Digital Assistant) type electronic notebook or personal organizer, a module to take a smart card, and an address book for saving address or calendar information. The device can also integrate a GPS (Global Positioning System) to calculate and give the geographical position, by displaying it for example on the PDA's screen. Thus the device enables communication, via the wireless communication networks, with terminals so that the user issues for example article purchase orders, or updates and communicates financial information. The objective is to operate, with a multipurpose compact portable device, the collection and storage of data or data transactions that are not image data.

International Patent Application WO 97/04332 describes a system for determining, via a radio type link, the geographical coordinates of the position of a user equipped with a portable device. The portable device lets the user obtain instantaneously his geographical position and transmit this position to a processing unit located near or far from said portable device.

The present invention enables a user who moves equipped with a portable terminal comprising a display screen, to know the geographical coordinates of places located in a given geographical zone and identified especially by their coordinates, such a place will be called hereafter: geolocalized point. Said places include at least one digital camera. The user's portable terminal does not necessarily include a camera as such. The user can for example be equipped with a cellular phone or PDA (Personal Digital Assistant). These last two devices do not thus enable obtaining the recording of digital images directly. According to the present invention, the user, with his portable terminal, selects and records an image by remotely controlling the digital camera placed in the location (geolocalized point) that he selects.

It is an object of the present invention to provide a method for supplying customized digital images of a geolocalized point, in an image database, said method comprising the following steps:
a) based on a request operated by using a portable terminal comprising a display screen, supply on the screen of the portable terminal data enabling the determination of geolocalized points, each geolocalized point comprising a fixed digital camera in the vicinity of said geolocalized point;
b) select, using the portable terminal, a geolocalized point from among the geolocalized points supplied at step a);
c) from the portable terminal, take control of the camera of the selected geolocalized point;
d) from the portable terminal, adjust the shooting parameters of the camera to select an image in the vicinity of the selected geolocalized point, by customizing said image from its view recovered in real time on the screen of the portable terminal, and from the adjustment operated;
e) from the portable terminal, validate the selection of the customized image obtained at step d) and automatically command the recording of said image by the camera;
f) automatically transmit and save the selected customized image recorded in the image database, immediately after recording, said database being included in a storage unit external to the camera and the portable terminal;

Another object of the present invention is to provide a supply system of customized geolocalized digital images in an image database comprising:
- a portable terminal equipped with a keyboard and a display screen to view at least one geolocalized image and command the recording of said image;
- a digital camera fixed in a geolocalized point to record the geolocalized image controlled from the portable terminal;
- means of communication between the portable terminal and an online service on the one hand, then between the portable terminal and the digital camera on the other hand;
said system being characterized in that it also comprises:
a) from the portable terminal, a remote interactive control of the adjustment functions of the digital camera to customize the geolocalized image by viewing it on the screen,
b) from the portable terminal, a remote interactive control of the function of recording the customized geolocalized image by the digital camera,
c) a means for automatically transmitting and saving the customized geolocalized image, in the image database, immediately after recording said image, said database being included in a storage unit external to the camera and the portable terminal.

One of the advantages of the invention is to enable the user to record one or more images of the given geolocalized point, even if said user is not equipped with a digital camera. Another advantage for the user is that the fixed digital camera of the geolocalized point is usually placed to enable the capture of the best images of the location in the best shooting conditions. This being unlike a person who is equipped with a personal camera, and who risks not being able to record the desired image shots, if he is confronted for example in situ, with random interference elements: for example if this person is hindered by other people placed in his field of view and who prevent the recording of an image from a certain angle. Another major advantage of the invention method is that it lets the user of the portable terminal controlling the camera, place himself in the image he wishes to record, without using the help of another person to photograph him.

In summary, the invention has the advantage of providing communication means enabling a user, to interactively and remotely control a shot selected in a geolocalized point, said geolocalized point comprising at least one digital camera; said user being placed in the immediate vicinity of the geolocalized point or being placed in another place, far from said geolocalized point.

Other characteristics will appear on reading the following description, with reference to the drawings of the represented figures.

Figure 1 shows an overall hardware environment used to implement the invention method.

Figure 2 shows diagrammatically a device for supporting and directing the digital camera according to the invention.

The following description is a detailed description of the main embodiments of the invention, with reference to the drawings in which the same numerical references identify the same elements in each of the different figures.

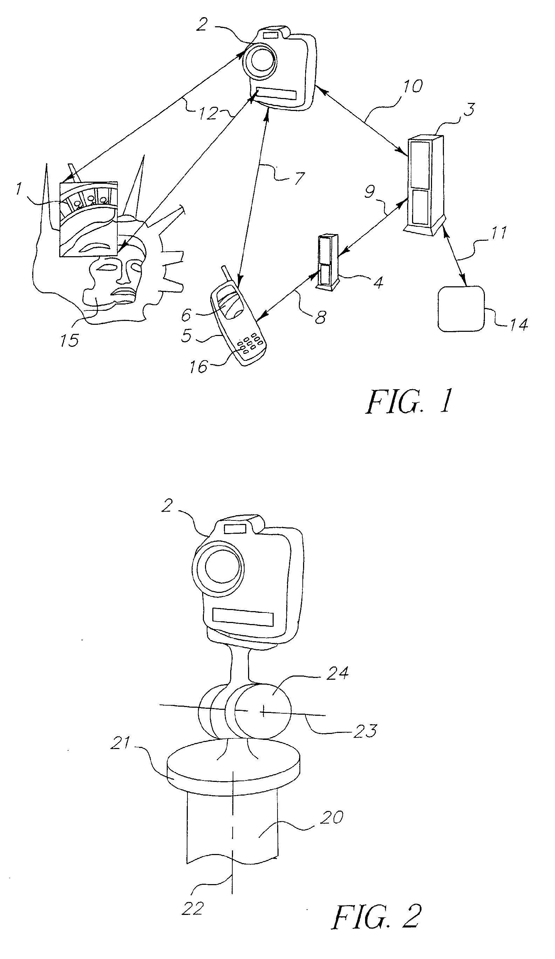

Figure 1 shows all the links and entities that materialize the implementation environment of the embodiments of the method of the present invention. The invention method enables a user to obtain at least one digital image 1 of a location he has selected to photograph, by interactively and remotely controlling a digital camera 2 placed in said location. The selected location is a geolocalized point, that can be recognized by using the GSM (Global System for Mobile) cellular type transmission relays of a wireless network. The geolocalized point 15 is for example a tourist site having special characteristics, like for example the Statue of Liberty, the Eiffel Tower, etc. One condition of implementing the invention method is that the geolocalized point includes at least one digital camera 2. The digital camera 2 is fixed, i.e. it is permanently set up at a place located in the vicinity of the geolocalized point, for example at a distance from several meters to several tens of meters from the point to be photographed. The digital camera 2 is fixed for example to a rigid support equipped with a device for the practically multidirectional orientation of said device. In a particular embodiment, the digital camera 2 is fixed onto a fixed support 20, said support 20 being placed in a geographical location (geolocalized point). The support 20 and the elements 21, 24 associated with it, enable both holding and multidirectional orientation of the digital camera 2. A rotating platform 21, solid with the support 20, rotates around an axis 22, in relation to said support 20. A base 24 fixed onto the platform 21 holds the camera 2 while letting it rotate around an axis 23, in relation to said base 24. The axes 22 and 23 are approximately perpendicular. The digital camera 2 is placed fixed in the near vicinity of the geolocalized point. The digital camera 2 is preferably a high-resolution digital camera. Such a camera enables the recording of high-resolution still digital images (for example about 250 image pixels per centimeter); these high-resolution images are thus of good quality. The camera also enables the recording of animated images, i.e. short video sequences for example. These sequences have an average length of about one to two minutes. The images can then for example be loaded or transmitted to other devices having a good display capacity and which are interfaced with said camera.

The digital camera 2, also called camera in the rest of the description, is linked to a server 3 by a link 10, letting it communicate with said server. Advantageously the link 10 is a wireless link. But the link 10 can also be a cabled link, if for example the server 3 is not too far from the camera 2. The camera 2 has several functions. The camera includes an automatic focussing function, proper to the camera, said function automatically operating when all the preliminary adjustments are finished, just before the recording of an image. In other words, the camera automatically controls the final focussing, just before the image is recorded. The camera generally also includes two adjustment functions, operated just before the final automatic focussing. A framing function, that enables the definition or selection of the frame of an image 1. The framing function includes two shooting parameters: on the one hand a shooting angle 12, which enables targeting a particular zone of an entity 15, whose image one wishes to obtain; and on the other hand a zoom, which enables obtaining the desired far off or closer up effect of the previously targeted zone. The shooting angle is obtained by making the camera 2 rotate on its movable support. The camera 2 also includes a recording function that enables the recording of the previously selected image, after the adjustment of the required shooting angle 12, and possibly the adjustment of the zoom's focal length. The invention method enables remotely controlling and commanding the framing (shooting angle and zoom) and recording functions of the camera 2. After these adjustments of the shooting angle and the focal length of the zoom, the selected image is thus customized by the user.

The invention method enables the equal use of two embodiments of the remote control and command of the digital camera 2. According to these two embodiments, the user, from the portable terminal 5, takes control and command, interactively and remotely, of the adjustment and recording functions respectively of the camera 2. The system enabling the implementation of the invention method comprises means to operate communications between the portable terminal 5 and an online service 14 on the one hand, then between the portable terminal 5 and the digital camera 2 on the other hand. These communication means are for example the server 3, a gateway 4, links 7, 8, 9, 10, and 11.

According to the first embodiment of the invention method, the first communication means used between the portable terminal 5 and the digital camera 2 is a global link of the wireless telephone network type. The architecture of this global link lets a terminal 5 communicate with the server 3 via a gateway 4. The terminal 5 emits a message in the appropriate protocol, e.g. WAP (Wireless Application Protocol); the message transits via the gateway 4 where it is converted for example into an HTTP message (Internet) to reach the server 3. The link 8 is for example a link of the wireless telephone network of the GSM (Global System for Mobile) or GPRS (General Packet Radio System) type. The link 9 between the gateway 4 and the server 3 is usually a cabled link. This first embodiment lets the user of the portable terminal 5 communicate with the digital camera 2 not only by being placed in the near vicinity of the camera (several tens of meters), but also by being far from said camera (distance covered by the wireless telephone network).

According to the second embodiment of the invention method, the second communication means used between the portable terminal 5 and the digital camera 2 is a link 7 of the high-frequency wireless type. The link 7 is for example of the DSRC type (Dedicated Short Range Communication), enabling high rate data exchanges (about one megabit per second) and using standards known to those skilled in the art, like for example the Bluetooth standard. The use of the link 7 enables the implementation of the invention method in the near vicinity of the camera, i.e. several meters, or even several tens of meters. Beyond this distance, this second embodiment cannot be implemented. But advantageously it supplements the first embodiment, if for example the telephone network coverage operates poorly. To control the camera 2, a variant of this second embodiment enables the use, according to the link 7 and instead of the terminal 5, of a small size modular device, for example a remote control, and which implements a high-frequency wireless transmission, for example of the infrared, radio frequency or Bluetooth type.

The algorithm of the driver enables the portable terminal 5 to recognize the camera 2 and its functionalities; the driver is for example built into the server 3 or into a dedicated PC type machine linked to the camera 2; this being, if one uses the communication means of the first embodiment, of the wireless telephone network type, between the portable terminal and the camera. Or the driver is for example built into the portable terminal 5 if said portable terminal is a cellular phone, and if one uses the communication means of the second embodiment, of the high-frequency type, between the portable terminal and the camera. The server 3 communicates, via for example a cabled link 11, with a network of online services of the Internet type. The user can thus, from the portable terminal 5, reach a service portal 14 in the Internet. He selects a specific heading for example linked to tourism that lets him find tourism geolocalized points comprising digital cameras. The user, using a simple command operated from the keyboard 16 of the portable terminal 5, runs a request that lets him be informed, by the display on the screen 6, of the tourism point(s), called geolocalized point(s). Each geolocalized point includes at least one digital camera 2. Advantageously the portable terminal 5 is a cellular phone equipped with a screen 6 with low display capacity, for example 80 by 120 pixels. But the portable terminal 5 can also be an electronic personal organizer of the PDA type, or any other portable digital device equipped with a display screen. The information or data enabling the determination of the geolocalized points are supplied to the user according to various display types on the screen 6. By means of a request to an online service 14, from the portable terminal 5, the supply of information is recovered on the screen 6 for example as a list of addresses of geolocalized points; the information enabling access to the geolocalized points can be enhanced with diagrammatic geographical maps that are displayed on the screen 6. This last option can be used if the portable terminal 5 includes for example a GPS system built into the casing of said portable terminal. The user can thus more easily go to the selected geolocalized point 15. The user can also automatically receive data about the geolocalized points via the SMS (Short Messaging System), if he subscribes for example to an online service letting him collect these data.

The request that lets the user determine the geolocalized points including at least one digital camera 2 is operated by a simple manual command on the keyboard 16 of the portable terminal 5. According to a variant of this embodiment, the invention method enables obtaining the geolocalized points nearest to the location of the portable terminal 5, at the time of the request intended to supply the data enabling the determination of the geolocalized points including a digital camera. This is done by operating a simple additional command on the keyboard 16, which consists in entering for example the distance (radius) of the area that the user desires to define. Based on the displayed data enabling the determination of the geolocalized points, the user selects, from the portable terminal 5, one geolocalized point for which he has selected to take photographs. The selection is operated simply, for example using the keyboard 16, by selecting and validating the selected geolocalized point; this is if the user receives for example a list of geolocalized points. If the selected geolocalized point includes several digital cameras, the invention method lets the user select one camera 2 from among all the cameras proposed for the selected geolocalized point. The user can also use the map supplied by the GPS system, if he wants for example to move more easily to the place of the selected geolocalized point. Generally the user preferably moves physically to the selected geolocalized point, but he can also select not to move to said geolocalized point. If the user selects not to move to the place of the geolocalized point, the only restriction to the implementation of the invention method is the coverage of the wireless telephone network. The fact that the user selects not to move to the geolocalized point also implies especially that he cannot be photographed or included in the image 1 that he desires to select and record. The user, from the portable terminal 5, takes remote control of the camera 2, by using either the wireless telephone network type link, or the high-frequency type link. This step of taking control enables making sure that the camera 2 is available for the user. If not, the user automatically receives a message on the screen 6 of the portable terminal telling him that the camera 2 is unavailable. After having taken control of the camera 2, the user, from the keyboard 16 of the portable terminal 5, remotely adjusts the shooting parameters of the camera 2, to select an image 1 in the vicinity 15 of the selected geolocalized point. Remote adjustment of the shooting parameters is operated for example under the control of a list of operations transmitted by the online service 14. The image 1 is selected from its view in real time on the screen 6 of the portable terminal 5. The server 3 includes a conversion module using for example the KODAK Petite Size Imaging algorithm, to adapt the high-resolution image from the camera 2 to the screen 6 of the portable terminal 5. When the image is selected and satisfies the user, the latter remotely validates the selection, from the terminal 5, by operating a simple command using the keyboard 16. This validation automatically and immediately commands the recording of the selected image 1 by the digital camera 2. One variant of the embodiment of the invention method enables the integration of a delay, preferably of a few seconds, between the validation of the selected image 1 and the effective recording by the camera 2. This delay lets the user especially to hide the portable terminal 5 (for example in his coat pocket), so that said terminal does not appear on the image 1, this is if said user selects to be photographed to be included in the image 1, without it being seen that he is holding for example his cellular phone in his hand. The invention method enables immediately after recording, the image to be automatically transmitted and saved instantly in an image database. This to obtain the digital image recorded in the vicinity of the geolocalized point. The image database is generally a personal database, proper to the user. But this database can also be a database shared by several users. The database is included in a data storage unit external to the digital camera 2 and external to the portable terminal 5. The storage unit is either included in a server for example the server 3, or included in a PC (Personal Computer) that can be connected for example directly to the camera 2 and placed near said camera. If the image is transmitted to a server, the digital camera includes a wireless modem, for example of the GSM or GPRS type; and the link 10 enabling communication between the camera 2 and the server, can optionally be a wireless link. The storage unit to which the images 1 are transferred enables for example a transfer of the image digital data to a service provider of the mini lab, image processing kiosk, etc. type. The link with this service provider is operated via Internet, and enables the collection of the recorded images to produce for example later printouts on other image supports (paper, fabric, etc.). The invention method also enables, in a particular embodiment, automatically carrying out invoicing just after the recording of the selected image, to an electronic account proper to the user; this electronic account is for example the invoice of the user's mobile phone.

The invention has been described in detail with reference to preferred embodiments, but it will be understood that variations and modifications can be effected within the scope of the invention. Accordingly, such embodiments are for illustration and do not restrict the claimed protection.

## Claims

1. A method for supplying customized digital images of a geolocalized point in an image database, said method comprising the following steps:
a) based on a request executed by using a portable terminal (5) comprising a display screen (6), supply on the screen (6) of the portable terminal (5) data enabling the determination of geolocalized points, each geolocalized point comprising a fixed digital camera (2) in the vicinity of said geolocalized point;
b) using the portable terminal (5), select a geolocalized point from among the geolocalized points supplied at step a);
c) from the portable terminal (5), take control of the camera (2) of the selected geolocalized point;
d) from the portable terminal (5), adjust the shooting parameters of the camera to select an image (1) in the vicinity (15) of the selected geolocalized point, by customizing said image from its view recovered in real time on the screen (6) of the portable terminal (5), and from the adjustment operated;
e) from the portable terminal (5), validate the selection of the customized image (1) obtained at step d) and automatically command the recording of said image (1) by the camera (2);
f) automatically transmit and save the recorded selected customized image (1) in the image database, immediately after recording, said database being included in a storage unit external to the camera (2) and the portable terminal (5);

2. The method of Claim 1 wherein the image database is a database proper to a user.

3. The method of Claim 1 wherein the image database is a database shared by several users.

4. The method according to any one of Claims 1 to 3, wherein the geolocalized point includes several digital cameras (2) fixed in the vicinity of said geolocalized point, and wherein step b) consists in selecting said geolocalized point and one of the several cameras available.

5. The method according to any one of Claims 1 to 4, wherein the validation of the selected image (1) and the recording of said image (1) by the camera (2), are offset by a few seconds.

6. The method according to any one of the preceding Claims, wherein invoicing is carried out automatically to an electronic account proper to the user, just after the recording of the selected image (1).

7. A system of supplying customized geolocalized digital images (1) in an image database comprising:
- a portable terminal (5) equipped with a keyboard (16) and a display screen (6) to view at least one geolocalized image and remotely command the recording of said image;
- a digital camera (2) fixed in a geolocalized point (15) to record the geolocalized image commanded from the portable terminal (5);
- communication means (3, 4, 7, 8, 9, 10, and 11) between the portable terminal (5) and an online service (14) on the one hand, then between the portable terminal (5) and the digital camera (2) on the other hand;
said system being **characterized in that** it also comprises:
a) from the portable terminal (5), a remote interactive control of the adjustment functions of the digital camera (2) to customize the geolocalized image by viewing it on the screen (6),
b) from the portable terminal (5), a remote interactive control of the function of recording the customized geolocalized image (1) by the digital camera (2),
c) a means for automatically transmitting and saving the customized geolocalized image (1), in the image database, immediately after recording said image, said database being included in a storage unit external to the camera (2) and the portable terminal (5).

8. The system of Claim 7, wherein the adjusting and recording functions of the digital camera (2) are operated, from the portable terminal (5), with a link (8, 9, and 10) of the wireless telephone network type.

9. The system of Claim 7, wherein the adjusting and recording functions of the digital camera (2) are operated, from the portable terminal (5), with a wireless link (7) of the high-frequency type.

10. The system according to any one of Claims 7 to 9, wherein the portable terminal (5) is a cellular phone.

11. The system according to any one of Claims 7 to 9, wherein the portable terminal (5) is a PDA.

12. The system according to any one of Claims 7 to 11, wherein the parameters of the camera (2), adjusted from the portable terminal (5), are the shooting angle (12) and the zoom.

13. The system according to any one of Claims 7 to 12, wherein the camera (2) is a digital camera fixed onto a support (20, 21, and 24) enabling multidirectional orientation of said camera.

14. The system according to any one of the preceding Claims, wherein the storage unit of the recorded customized images (1) is a personal computer (PC).

15. The system according to any one of the preceding Claims, wherein the storage unit of the recorded customized images (1) is a server.
